# EUROPÄISCHE PATENTSCHRIFT

(11) **EP 1 236 006 B1**
(45) Veröffentlichungstag und Bekanntmachung des Hinweises auf die Patenterteilung: **16.06.2004**
(21) Anmeldenummer: 00979307.6
(22) Anmeldetag: 08.12.2000
(51) Int. Cl.: F16M 7/00

(54) **NIVELLIERSCHUH**
LEVELING SHOE
SABOT DE NIVELLEMENT

(30) Priorität: 11.12.1999 CH 227899
(43) Veröffentlichungstag der Anmeldung: 04.09.2002
(73) Patentinhaber: Nivell AG, 5620 Bremgarten (CH)
(72) Erfinder: BIZAJ, Roger, CH-8965 Berikon (CH)
(74) Vertreter: Spicak-Malcova, Hana
(86) Internationale Anmeldenummer: PCT/CH2000/000651
(87) Internationale Veröffentlichungsnummer: WO 2001/042704

(56) Entgegenhaltungen:
- CH-A- 652 186
- US-A- 4 436 268
- US-A- 5 427 349

## Beschreibung

Die Erfindung betrifft einen Nivellierschuh gemäss dem Oberbegriff des Anspruches 1.

Ein Nivellierschuh dieser Art ist beispielsweise aus der CH-PS 652 186 bekannt. Dieser Nivellierschuh weist ebenfalls eine Bodenplatte sowie eine rechtwinklig zu einer Basisfläche der Bodenpatte mittels einer Stellkeilvorrichtung höhenverstellbare Tragplatte für einen Gegenstand, beispielsweise eine Maschine oder ein Gerät, auf. Die Stellkeilvorrichtung umfasst einen in Draufsicht im wesentlichen U-förmigen, ein Mittelstück sowie zwei Flügel aufweisenden Stellkeil auf, der mittels einer Schraubenspindel quer zur Höhenrichtung verschiebbar ist und dabei mit einem Paar von zueinander geneigten unteren Auflageflächen auf entsprechenden Flächen der Bodenplatte geführt ist. Gegebenenfalls ist die Verschieberichtung des Stellkeils zur Basisfläche geneigt. Sowohl das Mittelstück als auch die Flügel sind mit oberen Auflageflächen für die Tragplatte versehen, wobei diese wiederum ein Paar von zueinander geneigten Flächen bilden. Bei Verschiebung des Stellkeiles in einer Richtung wird die Tragplatte angehoben, wobei sie von einem mit der Bodenplatte fest verbundenen seitlichen Anschlagstück an einer Querverschiebung gehindert und lediglich in Höhenrichtung bewegt wird. Dabei werden insbesondere beim Anheben von grossen Lasten enorme seitliche Kräfte auf das Anschlagstück ausgeübt, die sogar zu einem Bruch desselben führen können. Auch die Schraubenspindel bzw. ein die Schraubenspindel aufnehmendes Lager sind einer starken axialen Beanspruchung ausgesetzt. Die U-Form des Stellkeiles ist notwendig, damit einerseits die Schraubenspindel, anderseits eine zur Basisfläche rechtwinklig angeordnete, den Gegenstand mit der Bodenplatte verbindende Befestigungsschraube Platz finden. Sowohl die Schraubenspindel als auch die Befestigungsschraube liegen jedoch in einem Abstand von einer zentralen, zur Basisfläche senkrechten Ebene (d.h. einer Schwerebene), was eine ungleichmässige Lastaufteilung auf den Stellkeil und eine zusätzliche Momentbelastung und Beanspruchung der Schraubenspindel bzw. des Lagers zur Folge hat, und die Stabilität des Nivellierschuhs zusätzlich beeinträchtigt. Ein weiterer Nachteil besteht darin, dass der Stellkeil eine relativ komplizierte Form aufweist (U-Form, exakte Auflage- und Führungsflächen etc.). Insbesondere bei Verwendung des Nivellierschuhs für grosse schwere Lasten, beispielsweise Werkzeugmaschinen, die auch starken Wechsellasten ausgesetzt sind, so dass eine grosse Steifigkeit des Stellkeils unerlässlich ist, und der Stellkeil aus Stahl präzis hergestellt werden muss, ist der Nivellierschuh herstellungstechnisch aufwendig.

Der vorliegenden Erfindung liegt die Aufgabe zugrunde, einen herstellungstechnisch einfachen und kostengünstigen Nivellierschuh zu schaffen, der eine verbesserte Stabilität aufweist.

Diese Aufgabe wird erfindungsgemäss durch einen Nivellierschuh mit den Merkmalen des Anspruches 1 gelöst.

Bevorzugte Weiterausgestaltungen des erfindungsgemässen Nivellierschuhs bilden den Gegenstand der abhängigen Ansprüche.

Dadurch, dass die Stellkeilvorrichtung ausser dem Stellkeil einen weiteren Gegenkeil aufweist, wobei die beiden Keile durch Betätigung der Schraubenspindel gegenseitig zueinander oder voneinander bewegbar sind, derart, dass ihre Auflageflächen für die Tragplatte in jeder Stellung symmetrisch zu einer zur Basisfläche senkrechten Ebene angeordnet sind, in der auch die Achse der Befestigungsschraube verläuft, wird erreicht, dass die enormen, einseitig wirkenden Kräfte wie beim Nivellierschuh nach der CH-PS 652 186 eliminiert werden, und die Last gleichmässig auf die beiden Keile aufgeteilt wird. Die mit zwei die gleiche Gewindesteigung, jedoch entgegengesetzte Steigungsrichtung aufweisenden Gewindeteilen versehene, rechtwinklig zur Symmetrieebene der Keile und parallel zur Basisfläche angeordnete Schraubenspindel bedarf keiner aufwendigen Axiallagerung mehr wie bisher notwendig, da die auf die beiden Gewindeteile übertragenen Axialkräfte einander entgegenwirken und sich somit ausgleichen. Obwohl statt eines Stellkeils zwei Keile verwendet werden, ist der Nivellierschuh einfacher und herstellungstechnisch kostengünstiger als herkömmliche Nivellierschuhe.

In einer besonders bevorzugten Weise greift die Schraubenspindel mit einem Gewindeteil in den Stellkeil und mit dem anderen Gewindeteil in eine zur anderen Seite des Stellkeils als der Gegenkeil angeordnete Platte ein, die mit dem Gegenkeil fest verbunden ist. Die Verbindung erfolgt vorzugsweise über zwei den Stellkeil durchragende, jeweils von einer im Stellkeil gleitend geführten Distanzhülse umgebene Verbindungsschrauben, die parallel zur Basisfläche angeordnet sind und auch als Führungselemente für die Keile dienen. Mit Vorteil sind die beiden Verbindungsschrauben zu beiden Seiten und im gleichen Abstand von einer zur Basisfläche rechtwinkligen Ebene angeordnet, in der die Schraubenspindelachse verläuft. Dadurch kann zentral zwischen den beiden Verbindungsschrauben eine mit der Bodenplatte verschraubte Zentrierhülse plaziert werden, auf der die Tragplatte vertikal geführt ist, und die für die Aufnahme der den Gegenstand mit der Bodenplatte verbindenden Befestigungsschraube vorgesehen ist. Die zentrale Anordnung sowohl der Zentrierhülse als auch der Schraubenspindel erhöht insbesondere bei hohen Lasten oder Wechsellasten wesentlich die Stabilität des Nivellierschuhs.

In vorteilhafter Weise kommen die beiden Keile in der der maximalen Höhenverstellung der Tragplatte nach oben entsprechenden Stellung mit gegenseitigen Anschlagflächen zur Anlage, so dass diese Endstellung klar definiert ist.

Ein Ausführungsbeispiel des erfindungsgemässen Nivellierschuhs ist in der Zeichnung dargestellt und im folgenden näher beschrieben.

Es zeigen:
- Fig. 1: einen Nivellierschuh im Längsschnitt; und
- Fig.2: den Nivellierschuh nach Fig. 1 in Draufsicht und teilweise im Schnitt.

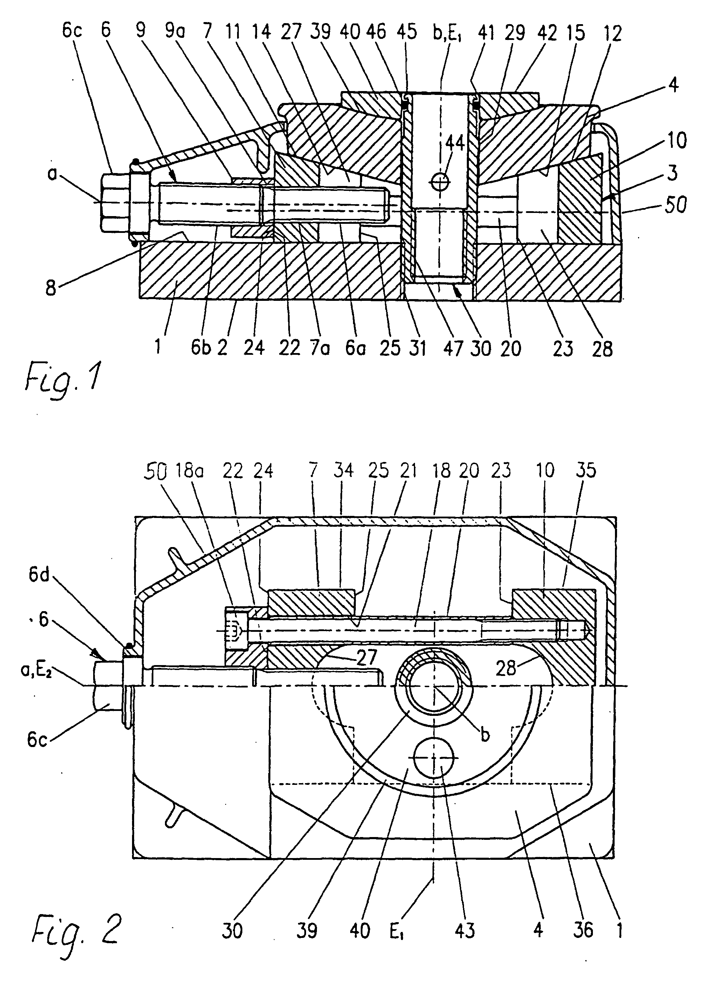

Gemäss Fig. 1 weist ein Nivellierschuh eine mit einer Basisfläche 2 auf dem Boden aufliegende Bodenplatte 1 sowie eine mittels einer Stellkeilvorrichtung 3 rechtwinklig zur Basisfläche 2 höhenverstellbare Tragplatte 4 für einen nicht dargestellten Gegenstand, beispielsweise eine Maschine oder ein Gerät, auf. Die Stellkeilvorrichtung 3 umfasst eine Schraubenspindel 6, deren Achse a parallel zur Basisfläche 2 angeordnet ist, und die einen ersten, in eine Gewindebohrung 7a eines auf einer oberen Fläche 8 der Bodenplatte 1 verschiebbar angeordneten Stellkeiles 7 eingreifenden Gewindeteil 6a aufweist. Die Schraubenspindel 6 ist ferner mit einem zweiten Gewindeteil 6b versehen, der bezüglich des ersten Gewindeteiles 6a die gleiche Gewindesteigung, jedoch eine entgegensetzte Steigungsrichtung aufweist (Links/Rechts-Gewinde). Der zweite Gewindeteil 6b greift in eine Gewindebohrung 9a einer Platte 9 ein, die - wie weiter unten näher beschrieben - mit einem ebenfalls auf der oberen Fläche 8 der Bodenplatte 1 verschiebbar angeordneten Gegenkeil 10 fest verbunden ist. Die beiden Keile 7, 10 sind mit je einer zur Basisfläche 2 geneigten Auflagefläche 11, 12 für die Tragplatte 4 versehen, die ihrerseits mit entsprechenden Auflageflächen 14, 15 ausgestattet ist. Die Auflageflächen 11, 12 der beiden mittels der Schraubenspindel 6 gegenseiteig zueinander oder voneinander bewegbaren Keile 7, 10 sind in jeder Stellung der Keile 7, 10 symmetrisch zu einer zur Schraubenachse a und zur Basisfläche 2 rechtwinkligen Ebene E₁ angeordnet.

Die Verbindung der Platte 9 mit dem - in Längsrichtung der Schraubenspindel gesehen - zu anderer Seite des Stellkeiles 7 als die Platte 9 angeordneten Gegenkeil 10 erfolgt bei dem in Fig. 2 dargestellten Ausführungsbeispiel mittels zwei den Stellkeil 7 durchragenden, gegebenenfalls mit ihrem Schraubenkopf 18a in der Platte 9 eingesenkten und in den Gegenkeil 10 eingeschraubten Verbindungsschrauben 18, die parallel und im gleichen Abstand von einer zur Basisfläche 2 und zur Symmetrieebene E₁ der beiden Keile 7, 10 rechtwinkligen Ebene E₂ angeordnet sind, in der auch die Spindelachse a liegt (aus der Zeichnung ist nur eine der beiden Verbindungsschrauben 18 ersichtlich).

Jeder Verbindungsschraube 18 ist eine Distanzhülse 20 zugeordnet, durch welche die Verbindungsschraube 18 hindurchragt, und die durch eine Bohrung 21 im Stellkeil 7 gleitend geführt ist. In axialer Richtung ist jede Distanzhülse 20 an einer Anschlagfläche 22 der Platte 9 einerseits und einer Anschlagfläche 23 des Gegenkeils 10 anderseits abgestützt, wobei die beiden Anschlagflächen 22, 23 senkrecht zur Basisfläche 2 angeordnet sind. In der Zeichnung ist diejenige Stellung der beiden Keile 7, 10 dargestellt, bei welcher die Anschlagfläche 22 der Platte 9 an einer dem Gegenkeil 10 abgewandten Anschlagfläche 24 des Stellkeiles 7 anliegt. In dieser Stellung befinden sich die beiden Keile 7, 10 in einem durch die Distanzhülse 20 definierten, maximalen Abstand voneinander entfernt.

Der Stellkeil 7 ist auf der dem Gegenkeil 10 zugewandten Seite mit einer Anschlagfläche 25 versehen, die der Anschlagfläche 23 des Gegenkeils 10 entspricht. Ausserdem weisen die beiden Keile 7, 10 je eine einander zugewandte, halbzylindrische Ausnehmung 27, 28 auf.

In eine Gewindebohrung 31 (Fig. 1) der Bodenplatte 1 ist eine rechtwinklig zur Basisfläche 2 angeordnete Zentrierhülse 30 eingeschraubt, auf welche die Tragplatte 4 mit einer zentralen Bohrung 29 verschiebbar aufgesetzt ist. Die Zentrierhülse 30 bestimmt die Anordnung der auf den Keilen 7, 10 lastenden Tragplatte 4 und damit auch der gesamten Stellkeilvorrichtung 3 auf der oberen Fläche 8 der Bodenplatte 1. Die senkrecht zur Basisfläche 2 gerichtete Achse b der Gewindebohrung 31, der Zentrierhülse 30 und der Tragplatte 4 fällt dabei mit der Schnittgeraden der beiden vorstehend beschriebenen Ebenen E₁, E₂ zusammen. Die Zentrierhülse 30 verläuft zentral zwischen den beiden Distanzhülsen 20; die Stellung der Stellkeilvorrichtung 3 gegenüber der Zentrierhülse 30 und der auf dieser Zentrierhülse 30 in Höhenrichtung geführten Tragplatte 4 in einer zur Basisfläche 2 parallelen und zur Spindelachse a rechtwinkligen Querrichtung ist beispielsweise durch mit Seitenflächen 34, 35 der beiden Keile 7, 10 wirkverbundene Seitenflächen 36 der Tragplatte 4 definiert (vgl. Fig. 2). Die beiden Distanzhülsen 20 können aber auch die Zentrierhülse 30 tangential berühren und dadurch die Stellung der Stellkeilvorrichtung 3 gegenüber der Zentrierhülse 30 quer zur Verschieberichtung der Keile 7, 10 definieren.

Die Tragplatte 4 ist mit einer oberen, leicht konkaven Ausnehmung 39 versehen, auf welcher eine auf ihrer unteren Seite kalottenförmig ausgestaltete Scheibe 40 aufliegt. Die Scheibe 40 weist eine die Zentrierhülse 30 mit einem Spiel umgebende Bohrung 41 und eine obere Fläche 42 auf. Die Fläche 42 ist mit zwei symmetrisch zur Scheibenachse angebrachten Vertiefungen 43 ausgestattet, von denen eine aus Fig. 2 ersichtlich ist. Die beiden Vertiefungen 43 sind zum Einsetzen einer nicht dargestellten Distanzscheibe (oder mehrerer Distanzscheiben aufeinandergeschichtet) vorgesehen und schützen diese gegen seitliches Wegrutschen.

Zum Einschrauben der Zentrierhülse 30 in die Gewindebohrung 31 der Bodenplatte 1 ist die Zentrierhülse 30 mit einem Montageloch 44 versehen. Die axiale Sicherung der Zentrierhülse 30 erfolgt über einen in einer Ringsnut 45 der Zentrierhülse 30 im Bereich der Scheibenbohrung 41 untergebrachten O-Ring 46. Die Zentrierhülse 30 weist ferner eine innere Gewindebohrung 47 auf, in die eine den Gegenstand mit der Bodenplatte 1 verbindende Befestigungsschraube (in der Zeichnung nicht dargestellt) einschraubbar ist.

Der Nivellierschuh ist mit einer die Tragplatte 4 auf ihrem Umfang umschliessenden und die Stellkeilvorrichtung 3 schützenden Abdeckhaube 50 ausgestattet, die dem Nivellierschuh eine ästhetische Aussenform erteilt. Die Schraubenspindel 6 ist mit ihrem Führungsbund 6d durch die Abdeckhaube 50 hindurchgeführt und ragt mit ihrem Kopf 6c (gegebenenfalls als ein Sechskantkopf ausgebildet) aus der Abdeckhaube 50 hinaus.

In einer Ausgangsstellung befinden sich die beiden Keile 7, 10 der Stellkeilvorrichtung 3 in der in der Zeichnung dargestellten Stellung, die der tiefsten Stellung der auf den Keilen 7, 10 durch Eigengewicht aufliegenden Tragplatte 4 entspricht. Je nach dem, ob der durch die Form und den Verschiebeweg der Keile 7, 10 definierte maximal mögliche Hub der Tragplatte 4 ausreicht, wird der in der Höhe auszurichtende Gegenstand, beispielsweise ein Maschinenfuss, direkt auf die Fläche 42 der Scheibe 40 aufgestellt, oder werden eine oder mehrere Distanzscheiben zwischen diese Fläche 42 und den Gegenstand gelegt (Rutschsicherung durch Vertiefungen 43 und entsprechende Vorsprünge der Distanzscheibe gewährleistet). Dann wird eine für die Befestigungsschraube vorgesehene Bohrung im Gegenstand, z.B. im Maschinenfuss, in eine zur Scheibenbohrung 41 koaxiale Stellung gebracht und die Befestigungsschraube in die Zentrierhülse 30 eingeschraubt. Die kalottenartig auf der Tragplatte 4 aufliegende Scheibe 40 dient dabei zum Ausgleichen von Winkeldifferenzen zwischen dem Maschinenfuss und der Basisfläche 2. Durch Drehen der Schraubenspindel 6 werden danach die beiden Keile 7, 10 zueinander bewegt und dabei die Tragplatte 4 - auf der Zentrierhülse 30 in Höhenrichtung geführt - samt der Last in die gewünschte Stellung angehoben. In einer dem maximalen Hub der Tragplatte 4 entsprechenden Stellung kommen die Anschlagflächen 25, 23 der Keile 7, 10 zum Anliegen, wobei die beiden halbzylindrischen Ausnehmungen 27, 28 zusammen eine die Zentrierhülse 30 umschliessende Öffnung bilden. Die Last wird gleichmässig auf die beiden Keile 7, 10 aufgeteilt und über diese auf die Bodenplatte 1 übertragen. Die auf die beiden Gewindeteile 6a, 6b der Schraubenspindel 6 über die Keile 7, 10 übertragenen Axialkräfte sind einander entgegengesetzt und gleichen sich somit aus. Dadurch entfällt die aufwendige Axiallagerung für die Schraubenspindel, die bei herkömmlichen Nivellierschuhen unumgänglich ist.

Dadurch, dass die Spindelachse a in der zentralen Ebene E₂ (d.h. einer Schwerebene) angeordnet ist, in der auch die Achse der Befestigungsschraube verläuft, wird die Schraubenspindel 6 mit keinen zusätzlichen Momenten belastet, die durch ein Lager aufgefangen werden müssten. Der mit der Platte 9 verbundene Gegenkeil 10 erspart die bei herkömmlichen Nivellschuhen notwendige, exakte Führung bzw. Lagerung der Schraubenspindel.

Die beiden Keile 7, 10 werden mittels der von Distanzhülsen 20 umgebenen Verbindungsschrauben 18 in ihrer Verschieberichtung geführt, so dass eine Anordnung von exakten, beispielsweise paarweise zueinander geneigten Auflage- bzw. Führungsflächen auf den Keilen einerseits und auf der Tragplatte anderseits, wie beim Nivellierschuh nach der CH-PS 652 186 vorhanden, nicht notwendig ist. Die Keile 7, 10 weisen eine einfache Aussenform auf und können kostengünstig angefertigt werden. Dies ist insbesondere bei Verwendung des Nivellierschuhs für schwere Lasten oder bei Wechsellasten von Bedeutung, bei denen die Keile 7, 10 eine ausreichende Steifigkeit aufweisen müssen, und die daher nicht beispielsweise im kostengünstigen Aluminium-Druckgussverfahren hergestellt werden können, sondern aus Stahl bestehen müssen.

Die auf den Keilen 7, 10 durch Eigengewicht ruhende Tragplatte 4 wird vorzugsweise zusätzlich gegen unsachgemässes Entfernen z.B. beim Transport oder Montage in nicht näher dargestellten Weise gesichert (beispielsweise durch die Transportplatte 4 mit der Bodenplatte 1 verbindende, den Hub der Transportplatte 4 in Höhenrichtung erlaubende Schraubenbolzen oder durch eine entsprechende Ausgestaltung der in die Bodenplatte 1 eingeschraubten Zentrierhülse).

Beim dargestellten Ausführungsbeispiel handelt es sich um einen Nivellierschuh, der mit dem Gegenstand verschraubt wird und mit diesem zusammen eine gegenüber dem Fundament freistehende Einheit bildet. Der erfindungsgemässe Nivellierschuh kann aber auch bei Maschinen, die eine Verankerung mit dem Fundament benötigen, eingesetzt werden. In diesem Fall entfällt bei der Zentrierhülse die Gewindebohrung 41, und eine durch die Zentrierhülse geführte Ankerschraube wird im Fundament verankert.

Es wäre theoretisch auch möglich, die Schraubenspindel mit einem der beiden, die entgegengesetzte Steigungsrichtung aufweisenden Gewindeteile direkt im Gegenkeil eingreifen zu lassen und den Gegenstand mit zwei in der Ebene E₁ angeordneten, zu beiden Seiten der Schraubenspindel symmetrisch zur Ebene E₂ angeordneten Befestigungsschrauben mit der Bodenplatte (1) oder mit dem Fundament zu verschrauben. Die erfindungsgemässe Lösung mit einer zentral angeordneten Befestigungsschraube erlaubt jedoch eine einfachere Positionierung des Gegenstandes gegenüber der Bodenplatte (1) sowie einen einfachen Ausgleich von Winkeldifferenzen zwischen dem Gegenstand und der Basisfläche 2.

## Patentansprüche

1. Nivellierschuh mit einer eine Basisfläche (2) aufweisenden Bodenplatte (1) und mit einer in einer zur Basisfläche (2) rechtwinkligen Höhenrichtung mittels einer Stellkeilvorrichtung (3) verstellbaren Tragplatte (4) für einen Gegenstand, wobei die Stellkeilvorrichtung (3) einen auf der Bodenplatte (1) aufliegenden und eine Auflagefläche (11) für die Tragplatte (4) aufweisenden, mittels einer Schraubenspindel (6) quer zur Höhenrichtung verschiebbaren Stellkeil (7) aufweist und wobei die Tragplatte (4) und die Bodenplatte (1) je eine Öffnung (29, 31) mit einer gemeinsamen Achse aufweisen, die im wesentlichen rechtwinklig zur Basisfläche (2) verläuft, zur Aufnahme einer Befestigungsschraube, mittels der der Gegenstand mit der Bodenplatte (1) oder mit dem Fundament verschraubbar ist, **dadurch gekennzeichnet, dass** die Stellkeilvorrichtung (3) einen weiteren, auf der Bodenplatte (1) aufliegenden und mit einer Auflagefläche (12) für die Tragplatte (4) versehenen Gegenkeil (10) umfasst, wobei zur Höhenverstellung der Tragplatte (4) die beiden Keile (7, 10) durch Betätigung der Schraubenspindel (6) gegenseitig zueinander oder voneinander bewegbar sind, wozu die Schraubenspindel (6) mit zwei die gleiche Gewindesteigung, jedoch entgegengesetzte Steigungsrichtung aufweisenden Gewindeteilen (6a, 6b) versehen ist, wobei die beiden Auflageflächen (11, 12) in jeder Stellung der Keile (7, 10) symmetrisch zu einer ersten, zur Basisfläche (2) senkrechten Ebene (E₁) angeordnet sind, in der die Achse der Öffnungen (29, 31) zur Aufnahme der Befestigungsschraube verläuft, und zu welcher die Schraubenspindelachse (a) rechtwinklig angeordnet ist.

2. Nivellierschuh nach Anspruch 1, **dadurch gekennzeichnet, dass** die Schraubenspindel (6) mit einem ersten Gewindeteil (6a) in eine Gewindebohrung (7a) im Stellkeil (7) und mit dem zweiten Gewindeteil (6b) in eine Gewindebohrung (9a) einer Platte (9) eingreift, die zur anderen Seite des Stellkeils (7) angeordnet ist als der Gegenkeil (10), und die mit dem Gegenkeil (10) fest verbunden ist.

3. Nivellierschuh nach Anspruch 1 oder 2, **dadurch gekennzeichnet, dass** die beiden Keile (7, 10) zur Basisfläche (2) der Bodenplatte (1) senkrechte Anschlagflächen (25, 23) aufweisen, mit denen sie bei der maximalen Höhenverstellung der Tragplatte (4) nach oben aneinander zur Anlage kommen.

4. Nivellierschuh nach Anspruch 2 und 3, **dadurch gekennzeichnet, dass** die Platte (9) mittels vorzugsweise zwei den Stellkeil (7) durchragenden, parallel zur Basisfläche (2) verlaufenden Verbindungsschrauben (18) mit dem Gegenkeil (10) verbunden ist, die jeweils von einer durch den Stellkeil (7) gleitend geführten Distanzhülse (20) umgeben sind, wobei sich die Distanzhülsen (20) zwischen der Anschlagfläche (23) des Gegenkeils (10) und einer Stirn- bzw. Anschlagfläche (22) der Platte (9) erstrecken.

5. Nivellierschuh nach Anspruch 4, **dadurch gekennzeichnet, dass** je eine von der Distanzhülse (20) umgebene Verbindungsschraube (18) zu beiden Seiten und im gleichen Abstand von einer zur Basisfläche (2) und zur ersten Ebene (E₁) rechtwinkligen zweiten Ebene (E₂) angeordnet ist, in der die Schraubenspindelachse (a) verläuft.

6. Nivellierschuh nach Anspruch 4 oder 5, **dadurch gekennzeichnet, dass** in einer der untersten Stellung der Tragplatte (4) entsprechenden Stellung der Keile (7, 10) die Stirn- bzw. Anschlagfläche (22) der Platte (9) an einer dem Gegenkeil (10) abgewandten Anschlagfläche (24) des Stellkeils (7) anliegt.

7. Nivellierschuh nach einem der Ansprüche 1 bis 6, **gekennzeichnet durch** eine mit der Bodenplatte (1) verbundene, vorzugsweise verschraubte Zentrierhülse (30), deren Achse (b) mit der Schnittgeraden der beiden, die Stellung der Keile (7, 10 ) bzw. der Schraubenspindel (6) definierenden, zur Basisfläche senkrechten Ebenen (E₁, E₂) zusammenfällt, auf welcher Zentrierhülse (30) die Tragplatte (4) mit der Öffnung (29) in Höhenrichtung verschiebbar geführt ist, und die zur Aufnahme der den Gegenstand mit der Bodenplatte (1) oder mit dem Fundament verbindenden Befestigunsschraube bestimmt ist.

8. Nivellierschuh nach Anspruch 3 und 7, **dadurch gekennzeichnet, dass** die Anschlagflächen (25, 23) der beiden Keile (7, 10) mit einander zugewandten, halbzylindrischen Ausnehmunden (27, 28) versehen sind, die in der der maximalen Höhenverstellung der Tragplatte (4) nach oben entsprechenden Stellung der Keile (7, 10) zusammen eine die Zentrierhülse (30) umschliessende Öffnung bilden.

9. Nivellierschuh nach Anspruch 7 oder 8, **dadurch gekennzeichnet, dass** die Tragplatte auf ihrer oberen Seite mit einer konkaven Ausnehmung (39) versehen ist, auf welcher eine auf ihrer unteren Seite kalottenartig ausgestaltete, mit einer Bohrung (41) die Zentrierhülse umgebende Scheibe (40) aufliegt, die mit ihrer oberen Fläche (42) eine Auflagefläche für den Gegenstand oder allfällige Distanzscheiben bildet.

10. Nivellierschuh nach Anspruch 4 und einem der Ansprüche 7 bis 9, **dadurch gekennzeichnet, dass** die Distanzhülsen (20) die Zentrierhülse (30) tangential berühren.

## Claims

1. Leveling shoe with a base plate (1) displaying a base surface (2) and with a supporting plate (4) for an object, said supporting plate (4) being adjustable in height perpendicular to the base surface (2) by means of a adjusting wedge device (3), said adjusting wedge device (3) displaying a adjusting wedge (7) resting on the base plate (1) and comprising a support surface (11) for the supporting plate (4), said adjusting wedge (7) being displaceable by means of a screw spindle (6) transversely to the elevation, and whereby the supporting plate (4) and the base plate (1) each display an opening (29, 31) with a common axis being arranged essentially at aright angle to the base surface (2) for the insertion of a connecting bolt, be means of which the object can be screwed with the base plate (1) or with the fundament, **characterised in that** the adjusting wedge device (3) comprises a further counterwedge (10) resting on the base plate (1) and equipped with a supporting area (12) for the supporting plate (4), whereby in order to adjust the height of the supporting plate (4) both wedges (7, 10) are movable reciprocally towards or away from each other by activating the screw spindle (6), to what purpose the screw spindle (6) is equipped with two threaded elements (6a, 6b) displaying the same thread pitch, but opposite thread direction, whereby both support surfaces (11, 12) in every position of the wedge (7, 10) are arranged symmetrically to a first plane (E₁) perpendicular to the base surface (2), in which the axis of the openings (29, 31) for the insertion of the connecting bolt runs, and to which the screw spindle axis is positioned at right angle.

2. Leveling shoe according to Claim 1, **characterised in that** the screw spindle (6) engages with a first threaded element (6a) in a threaded bore hole (7a) in the adjusting wedge (7) and with the second threaded element (6b) in a threaded bore hole (9a) of a plate (9), which is arranged on the other side of the adjusting wedge (7) from the counterwedge (1), and which is permanently fixed to the counterwedge (10).

3. Leveling shoe according to Claim 1 or 2, **characterised in that** both wedges (7, 10) display stop faces (25, 23) perpendicular to the base plate (1), with which, when the supporting plate (4) is at the maximum upward adjustment, they come to rest on each other.

4. Leveling shoe according to claim 2 and 3, **characterised in that** the plate (9) is connected, by means of advantageously two connecting bolts (18) projecting through the adjusting wedge (7) running parallel to the base surface (2), to the counterwedge (10), said connecting bolts (18) each surrounded by a spacer sleeve (20) guided through the adjusting wedge (7) so as to slide, wherein the spacer sleeves (20) extend between the stop face (23) of the counterwedge (10) and a front or stop face (22) of the plate (9).

5. Leveling shoe according to Claim 4, **characterised in that** there is a connecting bolt (18) encased by a spacer sleeve (20) positioned on either side and at the same distance from a second plane (E₂) at right angles to the base surface (2) and to the first plane (E₁), in which the screw spindle axis runs.

6. Leveling shoe according to Claim 4 or 5, **characterised in that** in a position of the wedges (7, 10) corresponding to the lowest position of the supporting plate (4) the front or stop face (22) of the plate (9) rests on a stop face (24) of the adjusting wedge (7) facing away from the counterwedge (10).

7. Leveling shoe according to one of claims 1 to 6, **characterised by** a centring sleeve (30) connected with the base plate (1), advantageously screwed with the base plate (1), whose axis (b) coincides with the intersection lines of the two planes (E₁, E₂) perpendicular to the base surface (2) defining the position of the wedges (7, 10) and/or the screw spindle (6), on which centring sleeve (3) the supporting plate (4) is displaceably guided with the opening (29) in the vertical direction and which is intended to accept the connecting bolt connecting the object to the base plate (1) or with the fundament.

8. Leveling shoe according to claims 3 and 7, **characterised in that** the stop faces (25, 23) of both wedges (7, 10) facing towards each other are provided with semi-cylindrical recesses (27, 28) which in the position of the wedges (7, 10) corresponding to the maximum upwards height adjustment of the supporting plate (4) together form an opening surrounding the centring sleeve (30).

9. Leveling shoe according to claim 7 or 8, **characterised in that** the supporting plate is provided with a concave recess (39) on its upper side on which rests a disc (40) which is dome-shaped on its underside with a bore hole (41) surrounding the centring sleeve (30), said disc with its upper area (42) forming a support surface for the object or any necessary spacer discs.

10. Leveling shoe according to claim 4 and one of claims 7 to 9, **characterised in that** the spacer sleeves (20) touch the centring sleeve (30) tangentially.

## Revendications

1. Sabot de nivellement comportant une plaque de fond (1) qui présente une surface de base (2) et comportant une plaque d'appui (4) d'un objet, réglable dans une direction de hauteur perpendiculaire à la surface de base (2) au moyen d'un dispositif à clavette de réglage (3), dans lequel le dispositif à clavette de réglage (3) présente une clavette de réglage (7) reposant sur la plaque de fond (1) et présentant une surface d'appui (11) pour la plaque d'appui (4), et pouvant être déplacée au moyen d'une tige filetée (6) perpendiculairement à la direction de la hauteur, et dans lequel la plaque d'appui (4) et la plaque de fond (1) présentent chacune une ouverture (29, 31) ayant un axe conjoint, laquelle s'étend essentiellement perpendiculairement à la surface de base (2), et est destinée à recevoir une vis de fixation au moyen de laquelle l'objet peut être vissé avec la plaque de fond (1) ou la fondation, **caractérisé en ce que** le dispositif à clavette de réglage (3) comporte une autre contre-clavette (10), reposant sur la plaque de fond (1) et pourvue d'une surface d'appui (12) pour la plaque d'appui (4), et, pour le réglage en hauteur de la plaque d'appui (4), les deux clavettes (7, 10) peuvent être déplacées l'une vers l'autre ou écartées l'une de l'autre par actionnement de la tige filetée (6), la tige filetée (6) étant pour ce faire munie de deux éléments filetés (6a, 6b) présentant le même filetage, mais avec une direction de filetage opposée, les deux surfaces d'appui (11, 12) étant disposées, dans chaque position des clavettes (7, 10), symétriquement par rapport à un premier plan (E1) perpendiculaire à la surface de base (2), plan dans lequel s'étend l'axe des ouvertures (29, 31) destinées à loger la vis de fixation, et perpendiculairement auquel est disposé l'axe (a) de la tige filetée.

2. Sabot de nivellement selon la revendication 1, **caractérisé en ce que** la tige filetée (6) s'engrène dans un perçage fileté (7a) de la clavette de réglage (7) par un premier élément fileté (6a), et dans un perçage fileté (9a) d'une plaque (9) par le second élément fileté (6b), cette plaque étant disposée vers l'autre côté de la clavette de réglage (7) par rapport à la contre-clavette (10) et étant fermement reliée à la contre-clavette (10).

3. Sabot de nivellement selon la revendication 1 ou 2, **caractérisé en ce que** les deux clavettes (7, 10) présentent des surfaces de butée (25, 23) perpendiculaires à la surface de base (2) de la plaque de fond (1), avec lesquelles elles viennent en contact par le haut lors du réglage en hauteur maximale de la plaque d'appui (4).

4. Sabot de nivellement selon la revendication 2 et 3, **caractérisé en ce que** la plaque (9) est reliée à la contre-clavette (10) au moyen de préférence de deux vis de jonction (18) faisant saillie depuis la clavette de réglage (7) et s'étendant parallèlement à la surface de base (2), lesquelles vis sont respectivement entourées par une douille d'écartement (20) amenée de façon coulissante par la clavette de réglage (7), les douilles d'écartement (20) s'étendant entre la surface de butée (23) de la contre-clavette (10) et une surface avant ou de butée (22) de la plaque (9).

5. Sabot de nivellement selon la revendication 4, **caractérisé en ce que** chacune des vis de jonction (18) entourées par les douilles d'écartement (20) est disposée d'un des deux côtés, et selon un écartement identique, d'un second plan (E2) perpendiculaire à la surface de base (2) et au premier plan (E1), et dans lequel s'étend l'axe (a) de la tige filetée.

6. Sabot de nivellement selon la revendication 4 ou 5, **caractérisé en ce que** dans une position des clavettes (7, 10) correspondant à la position la plus basse de la plaque d'appui (4), la surface avant ou de butée (22) de la plaque (9) repose au niveau d'une surface de butée (24) de la clavette de réglage (7) opposée à la contre-clavette (10).

7. Sabot de nivellement selon l'une des revendications 1 à 6, **caractérisé par** une douille de centrage (30) reliée à la plaque de fond (1) et de préférence vissée, dont l'axe (b) coïncide avec la bissectrice des deux plans (E1, E2) définissant la position des clavettes (7, 10) ou de la tige filetée (6) et perpendiculaires à la surface de base, douille de centrage (30) sur laquelle la plaque d'appui (4) est guidée avec l'ouverture (29) de façon réglable en hauteur et qui est définie pour loger la vis de fixation reliant l'objet à la plaque de fond (1) ou à la fondation.

8. Sabot de nivellement selon la revendication 3 et 7, **caractérisé en ce que** les surfaces de butée (25, 23) des deux clavettes (7, 10) sont équipées d'évidements (27, 28) semi-cylindriques orientés les uns vers les autres, qui, dans la position des clavettes (7, 10) correspondant au réglage en hauteur maximale de la plaque d'appui (4), forment ensemble une ouverture entourant la douille de centrage (30).

9. Sabot de nivellement selon la revendication 7 ou 8, **caractérisé en ce que** la plaque d'appui est pourvue, sur son côté supérieur, d'un évidement concave (39) sur lequel repose un disque (40) de type calotte sphérique sur sa face inférieure et entourant la douille de centrage par un perçage (41), lequel disque forme par sa surface supérieure (42) une surface d'appui pour l'objet ou des disques d'écartement éventuels.

10. Sabot de nivellement selon la revendication 4 et l'une des revendications 7 à 9, **caractérisé en ce que** les douilles d'écartement (20) touchent de façon tangente la douille de centrage (30).
